# EUROPEAN PATENT APPLICATION

(11) **EP 4 675 565 A1**
(43) Date of publication of application: **07.01.2026**
(21) Application number: 23925082.2
(22) Date of filing: 19.12.2023
(51) Int. Cl.: G06T 17/00

(54) **THREE-DIMENSIONAL COLOR MAP CONSTRUCTION METHOD AND APPARATUS, STORAGE MEDIUM AND ELECTRONIC DEVICE**

(30) Priority: 02.03.2023 CN 202310203606
(71) Applicant: Beijing Roborock Innovation Technology Co., Ltd., Beijing 102206 (CN)
(72) Inventor: NIU, Chenyu, Beijing 102206 (CN); WANG, Tiandong, Beijing 102206 (CN); ZHANG, Xiaobin, Beijing 102206 (CN); WU, Erqi, Beijing 102206 (CN)
(74) Representative: Lorenz Seidler Gossel Part. mbB
(86) International application number: PCT/CN2023/139819
(87) International publication number: WO 2024/179137

(57) **Abstract**

Disclosed in the present application are a three-dimensional color map construction method and apparatus, a storage medium and an electronic device. The method comprises: acquiring at least one three-dimensional object model, and acquiring a three-dimensional blank scene; and placing the three-dimensional object model in the three-dimensional blank scene, and coloring the three-dimensional object model to acquire a three-dimensional color map. The method of the present application solves the problem in the prior art of maps created by mobile smart devices being not visual enough.

## Description

The present application claims priority to Chinese Patent Application No. 202310203606.4, filed to the Patent Office of China on March 2, 2023 and titled "METHOD AND APPARATUS FOR CONSTRUCTING THREE-DIMENSIONAL COLOR MAP, STORAGE MEDIUM AND ELECTRONIC DEVICE", the entire content of which is incorporated herein by reference.

### TECHNICAL FIELD

The present application relates to the technical field of intelligent household appliances, and in particular to a method and an apparatus for constructing a three-dimensional color map, a storage medium and an electronic device.

### BACKGROUND ART

With the development of computer technologies and artificial intelligence technologies, mobile intelligent devices with intelligent systems, such as cleaning robots, have emerged. These mobile intelligent devices can automatically travel in a certain area without user operations and perform corresponding operations according to user instructions or set programs. Sensors such as gray cameras, color cameras, depth cameras or laser radars are usually installed in the mobile intelligent devices. In a working process, a cleaning robot acquires corresponding information in a working area, such as a color image, a gray image and a point cloud, through the sensors above, so as to draw a map of the area, and feed the drawn map back to a user, so that the user can learn the map information of the area where the mobile intelligent device is located.

However, the maps created by the mobile intelligent devices in related technologies are usually two-dimensional plane maps or three-dimensional maps without any color, but including walls, floors, furniture and other models. As a result, the maps presented to the user are difficult to understand intuitively.

### SUMMARY OF THE INVENTION

In view of this, the present application provides a method and an apparatus for constructing a three-dimensional color map, a storage medium and an electronic device, which solve the problem that maps constructed by the existing mobile intelligent devices are not intuitive enough.

According to an aspect of the present application, a method for constructing a three-dimensional color map is provided. The method includes:
acquiring at least one three-dimensional object model and acquiring a three-dimensional blank scene; and
placing the three-dimensional object model in the three-dimensional blank scene, and coloring the three-dimensional object model to acquire the three-dimensional color map.

In one embodiment, the acquiring at least one three-dimensional object model includes:
acquiring map information by photographing environmental information of a target area through a self-moving device, and recognizing the map information to acquire object information;
acquiring a three-dimensional preset model corresponding to the object information in a preset three-dimensional model library as the three-dimensional object model; and/or
analyzing, in response to a model input instruction, the model input instruction to acquire the three-dimensional object model.

In one embodiment, the acquiring a three-dimensional blank scene includes:
acquiring the map information by photographing the environmental information of the target area through the self-self-moving device, and recognizing the map information to acquire map boundary information;
determining a three-dimensional preset scene matched with the map boundary information in a plurality of three-dimensional preset scenes as the three-dimensional blank scene; or
analyzing, in response to a scene input instruction, the scene input instruction to acquire the three-dimensional blank scene.

In one embodiment, the object information includes category information and/or three-dimensional structural information; and acquiring a three-dimensional preset model corresponding to the object information as the three-dimensional object model includes:
retrieving the three-dimensional preset model corresponding to the category information, and taking the three-dimensional preset model retrieved as the three-dimensional object model; and/or
determining a similarity between the three-dimensional structural information and preset three-dimensional structural information of each three-dimensional preset model respectively, and determining the three-dimensional preset model with the highest similarity as the three-dimensional object model.

In one embodiment, the placing the three-dimensional object model in the three-dimensional blank scene includes:
acquiring first pose information in the object information, or acquiring the first pose information by analyzing a pose setting instruction; and
determining a first position and a first posture which correspond to the first pose information in the three-dimensional blank scene, and placing the three-dimensional object model in the first position, the three-dimensional object model being in the first pose.

In one embodiment, the coloring the three-dimensional object model includes:
determining a target coloring scheme of the three-dimensional object model according to the category information, or determining the target coloring scheme by analyzing a coloring instruction, wherein the target coloring scheme includes a target color and/or a target texture; and
coloring the three-dimensional object model according to the target coloring scheme.

In one embodiment, after acquiring the three-dimensional color map, the method also includes:
setting, in response to a pass prohibition instruction, a pass prohibition area or a virtual wall corresponding to the pass prohibition instruction in the three-dimensional color map; and/or,
setting, in response to a pass permission instruction, a pass permission area corresponding to the pass permission instruction in the three-dimensional color map.

In one embodiment, after placing the three-dimensional object model in the three-dimensional blank scene, the method also includes:
acquiring second pose information of the self-moving device; and
determining a second position and a second posture which correspond to the second pose information in the three-dimensional blank scene, and placing a three-dimensional device model corresponding to the self-moving device in the second position, the three-dimensional device model being in the second pose.

In one embodiment, after acquiring the three-dimensional color map, the method also includes:
acquiring a motion trajectory of the self-moving device or a motion trajectory of a photographing apparatus installed on the self-moving device, and determining a pose and an internal parameter of the photographing apparatus in each position on the motion trajectory;
processing the three-dimensional color map according to the pose and the internal parameter of each position respectively to acquire a two-dimensional picture corresponding to the position; and/or,
modifying the three-dimensional color map in response to a modification instruction, and displaying the three-dimensional color map modified.

According to another aspect of the present application, an apparatus for constructing a three-dimensional color map is provided. The apparatus includes:
an acquisition module, configured to acquire at least one three-dimensional object model and acquire a three-dimensional blank scene; and
a construction module, configured to place the three-dimensional object model in the three-dimensional blank scene and color the three-dimensional object model to acquire the three-dimensional color map.

In one embodiment, the acquisition module is configured to:
acquire map information by photographing environmental information of a target area through a self-moving device, and recognize the map information to acquire object information;
acquire a three-dimensional preset model corresponding to the object information as the three-dimensional object model in a preset three-dimensional model library; and/or,
analyze, in response to a model input instruction, the model input instruction to acquire the three-dimensional object model.

In one embodiment, the acquisition module is configured to:
acquire the map information by photographing the environmental information of the target area through the self-self-moving device, and recognize the map information to acquire map boundary information;
determine a three-dimensional preset scene matched with the map boundary information as the three-dimensional blank scene in a plurality of three-dimensional preset scenes; or,
analyze, in response to a scene input instruction, the scene input instruction to acquire the three-dimensional blank scene.

In one embodiment, the object information includes category information and/or three-dimensional structural information; and the acquisition module is configured to:
retrieve the three-dimensional preset model corresponding to the category information, and take the retrieved three-dimensional preset model as the three-dimensional object model; and/or,
respectively determine a similarity between the three-dimensional structural information and preset three-dimensional structural information of each of the three-dimensional preset models, and determine the three-dimensional preset model with the highest similarity as the three-dimensional object model.

In one embodiment, the construction module is configured to:
acquire first pose information in the object information, or analyze a pose setting instruction to acquire the first pose information; and
determine a first position and a first posture which correspond to the first pose information in the three-dimensional blank scene, and place the three-dimensional object model in the first position, the three-dimensional object model being in the first pose.

In one embodiment, the construction module is configured to:
determine a target coloring scheme of the three-dimensional object model according to the category information, or analyze a coloring instruction to acquire the target coloring scheme, wherein the target coloring scheme includes a target color and/or a target texture; and
color the three-dimensional object model according to the target coloring scheme.

In one embodiment, the construction module is also configured to:
set, in response to a pass prohibition instruction, a pass prohibition area or a virtual wall corresponding to the pass prohibition instruction in the three-dimensional color map; and/or,
set, in response to a pass permission instruction, a pass permission area corresponding to the pass permission instruction in the three-dimensional color map.

In one embodiment, the construction module is also configured to:
acquire second pose information of the self-moving device; and
determine a second position and a second posture which correspond to the second pose information in the three-dimensional blank scene, and place a three-dimensional device model corresponding to the self-moving device in the second position, the three-dimensional device model being in the second pose.

In one embodiment, the apparatus also includes a post-processing module, configured to:
acquire a motion trajectory of the self-moving device or a photographing apparatus installed on the self-moving device, and determine a pose and an internal parameter of the photographing apparatus in each position on the motion trajectory;
process the three-dimensional color map according to the pose and the internal parameter of each position respectively to acquire a two-dimensional picture corresponding to the position and display the two-dimensional picture; and/or,
modify the three-dimensional color map in response to a modification instruction, and display the modified three-dimensional color map.

According to yet another aspect of the present application, a storage medium is provided. The storage medium is configured to store programs or instructions thereon, the programs or instructions, when executed by a processor, implementing the above method for constructing the three-dimensional color map.

According to still another aspect of the present application, an electronic device is provided. The electronic device includes a storage medium and a processor, wherein the storage medium stores a computer program, and the processor implements the above method for constructing the three-dimensional color map when executing the computer program.

By virtue of the above technical solutions, in the present application, the at least one three-dimensional object module and the three-dimensional blank scene are acquired, the three-dimensional object model is then placed in the three-dimensional blank scene, and the placement of an object in an actual scene is also simulated. Finally, the target model is colored. By such a method, a three-dimensional map with colors is established in this embodiment. Compared with a black-and-white map of a plane constructed by an exemplary method, the map constructed by this embodiment is more attractive in appearance and easier for recognition of each object in the map, which is convenient for a user to understand.

The above illustrations are only an overview of the technical solutions of the present application. In order to understand the technical means of the present application more clearly, it can be implemented according to contents of the description, and in order to make the above and other purposes, features and advantages of the present application more obvious and understandable, the following is the specific implementation of the present application.

### BRIEF DESCRIPTION OF THE DRAWINGS

The accompanying drawings illustrated herein are used to provide a further understanding of the present application and form part of the present application. The exemplary embodiments of the present application and illustrations thereof are used to explain the present application and do not form undue limitations on the present application. In the accompanying drawings:
Fig. 1 shows a schematic flowchart of a method for constructing a three-dimensional color map according to an embodiment of the present application;
Fig. 2 shows a schematic flowchart of a method for constructing a three-dimensional color map according to an embodiment of the present application; and
Fig. 3 shows a structural block diagram of an apparatus for constructing a three-dimensional color map according to an embodiment of the present application.

### DETAILED DESCRIPTION

In the following, the present application will be illustrated in detail with reference to the drawings and in combination with the embodiments. It should be noted that the embodiments in the present application and the features in the embodiments can be combined with each other without conflict.

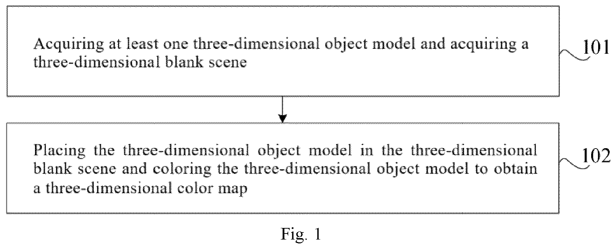

In the present embodiment, a method for constructing a three-dimensional color map is provided. As shown in Fig. 1, the method includes:
step 101: acquiring at least one three-dimensional object model and acquiring a three-dimensional blank scene; and
step 102: placing the three-dimensional object model in the three-dimensional blank scene and coloring the three-dimensional object model to acquire the three-dimensional color map.

The method for constructing the three-dimensional color map according to the embodiment of the present application is used for a self-moving device such as a cleaning robot to simulate the placement of an actual object in an actual three-dimensional scene by using the three-dimensional object model and the three-dimensional blank scene, construct the three-dimensional color map, and feed the constructed three-dimensional color map back to a user, so that the user can intuitively learn the object placement state in the current target area.

By such a method, a three-dimensional map with colors is constructed in this embodiment. Compared with a black-and-white map of a plane constructed by the exemplary method, the map constructed by this embodiment is more attractive in appearance and easier for recognition of each object in the map, which is convenient for the user to understand.

In one implementation of an embodiment of the present application, in step 101, the acquiring the at least one three-dimensional object model includes the following steps: step 101-a1: acquiring map information by photographing environmental information of a target area through a self-moving device, and recognizing the map information to acquire object information; and acquiring a three-dimensional preset model corresponding to the object information as the three-dimensional object model in a preset three-dimensional model library;
and/or,
step 101-a2: analyzing, in response to a model input instruction, the model input instruction to acquire the three-dimensional object model.

In this embodiment, a sensing apparatus is installed on the self-moving device, and the map information of the target area may be photographed by using the sensing apparatus. The photographing apparatus may be a color camera, a black-and-white camera, a depth camera or a radar, and may also be a sensor, etc. If the photographing apparatus is a color camera, the map information is a color image; if the photographing apparatus is a black-and-white camera, the map information is a gray image; if the photographing apparatus is a depth camera, the map information is a depth image; and if the photographing apparatus is a radar, the map information is point cloud information. In addition, the map information may also include pose information of the photographing apparatus when the map information is acquired.

After acquiring the map information by using the photographing apparatus, based on the map information, the object information in the target area is acquired by using a recognition algorithm. It can be understood that the recognition algorithm is an instruction set. The map information acquired by the photographing apparatus is taken as input information, the input information is processed, and one or more types of and one or more pieces of object information with predefined categories are output within a limited time. The recognition algorithm may recognize a point cloud map to acquire the information such as the size, category and pose of the objects.

There may be a plurality of objects or a plurality of types of objects in the target area, and the object information may include the information such as the category, pose and size of the objects. In addition, the object information may also include three-dimensional structural information, such as a three-dimensional point cloud and a truncated signed distance function (TSDF) of furniture.

According to the object information, the preset three-dimensional model corresponding to each object may be found in the preset three-dimensional model library as the three-dimensional object model corresponding to the object, respectively. Then, according to the pose information of each object, the three-dimensional object model is placed in the three-dimensional blank scene, and the three-dimensional object model is colored according to a certain rule to acquire the three-dimensional color map.

In addition, the three-dimensional object model may also be acquired by receiving the model input instruction input by the user and analyzing the instruction.

This embodiment provides two different methods for acquiring the three-dimensional object model, which improves the flexibility of acquiring the three-dimensional object model, so that the user can flexibly select a more suitable method according to actual needs. In addition, when a plurality of three-dimensional object models is acquired, the two methods may be mixed for use, that is, part of the three-dimensional object models are acquired by using the object information acquired through the self-moving device, and the other part of three-dimensional object models are acquired according to the model data instruction.

In one implementation of an embodiment of the present application, in step 101, the acquiring a three-dimensional blank scene includes the following steps:
step 101-b1: acquiring the map information by photographing the environmental information of the target area through the self-moving device, and recognizing the map information to acquire map boundary information; determining a three-dimensional preset scene matched with the map boundary information as the three-dimensional blank scene in a plurality of three-dimensional preset scenes;
   and/or,
step 101-b2: analyzing, in response to a scene input instruction, the scene input instruction to acquire the three-dimensional blank scene.

In this embodiment, the three-dimensional blank scene may be matched with the map boundary information, and the map boundary may be acquired according to the map information photographed by the self-moving device, and may also be determined according to the data such as a received house type plan. Preferably, the map boundary information may include an outer contour, wall contours, as well as door and window contours.

For example, the map boundary information acquired from the map information is a boundary corresponding to a kitchen, a three-dimensional object model corresponding to a dining table is acquired, and then the three-dimensional object model is placed in the three-dimensional blank scene corresponding to the kitchen.

In addition, the three-dimensional blank scene may also be acquired by receiving the scene input instruction input by the user and analyzing the instruction. For example, if the user inputs the three-dimensional blank scene with only an outer contour and acquires a three-dimensional object model corresponding to a wall and a three-dimensional object model corresponding to a chair, the two acquired three-dimensional object models are placed in the three-dimensional blank scene.

This embodiment provides two different methods for acquiring the three-dimensional blank scene, which improves the flexibility of acquiring the three-dimensional blank scene, so that the user can flexibly select a more suitable method according to actual needs.

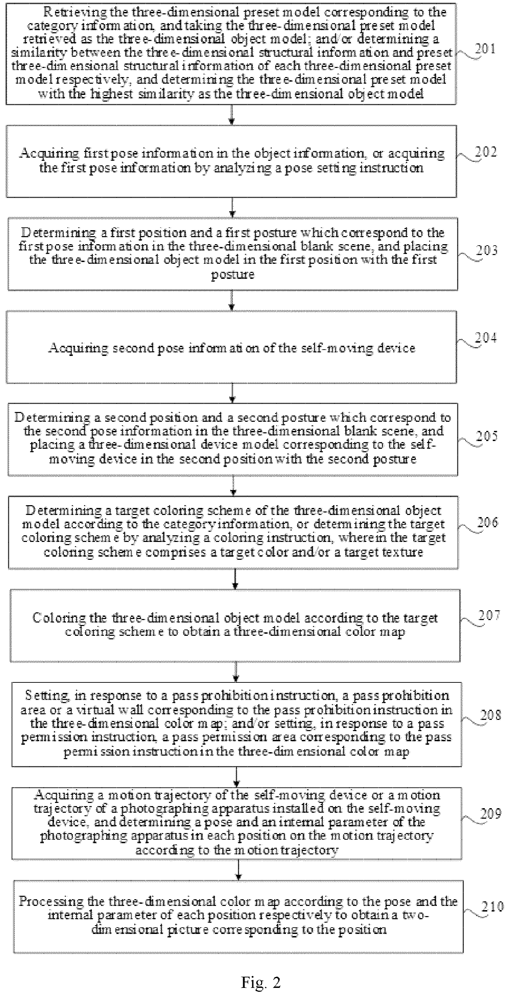

Also, as a refinement and expansion of the specific implementation of the above embodiment, in order to fully explain the specific implementation process of the present embodiment, another method for constructing a three-dimensional color map is provided. In this method, the object information includes category information or three-dimensional structural information. As shown in Fig. 2, the method includes the following steps:
In step 201, the three-dimensional preset model corresponding to the category information is retrieved, and the retrieved three-dimensional preset model is taken as the three-dimensional object model; and/or, a similarity between the three-dimensional structural information and preset three-dimensional structural information of each three-dimensional preset model is determined respectively, and the three-dimensional preset model with the highest similarity is determined as the three-dimensional object model.

In an embodiment of the present application, according to the category or three-dimensional structural information of the object, the corresponding three-dimensional object model is selected for the object in the three-dimensional preset model library.

Specifically, the corresponding three-dimensional object model may be retrieved in the three-dimensional preset model library according to the category information of the object. For example, if the category information of the object is a dining table, the three-dimensional preset model corresponding to the dining table category is retrieved in the three-dimensional preset model library as the three-dimensional object model.

In addition, retrieving may also be performed according to a three-dimensional structural similarity of the object. Specifically, the three-dimensional structural similarity between each three-dimensional preset model and the object is calculated according to the preset three-dimensional structural information of each three-dimensional preset model in the three-dimensional preset model library and a three-dimensional structure of the object respectively, and the three-dimensional preset model with the closest three-dimensional structure, that is, the highest similarity, is taken as the three-dimensional object model.

For example, if the category information of the object is the dining table, but the three-dimensional preset model of the dining table category is not retrieved in the three-dimensional preset model library, the three-dimensional structural similarity between each three-dimensional preset model in the model library and the object may be calculated respectively, and by calculation, it is acquired that the three-dimensional preset model of a desk is the closest to the three-dimensional structure of the object. Therefore, the three-dimensional preset model of the desk is taken as the three-dimensional object model.

The embodiment of the present application provides two methods for determining the three-dimensional object model. In these methods, the three-dimensional object model corresponding to each object can be selected quickly and accurately, and then each object is identified in the three-dimensional color map by using the three-dimensional object model. In addition, when a plurality of three-dimensional object models is determined, the two methods may be mixed for use, that is, part of the three-dimensional object models are acquired according to the three-dimensional structural similarities of the objects, and the other part of three-dimensional object models are acquired according to the category information of the objects.

In step 202, first pose information in the object information is acquired, or a pose setting instruction is analyzed to acquire the first pose information.

In step 203, in the three-dimensional blank scene, a first position and a first posture which correspond to the first pose information are determined, and the three-dimensional object model is placed in the first position with the first posture.

After the three-dimensional object model corresponding to each object is determined, the three-dimensional object model is placed in the three-dimensional blank scene. Understandably, in the actual use scene, each object has a corresponding placement position and posture. Therefore, when the three-dimensional map is constructed according to the actual scene, the position and posture information of each object are also mapped into the three-dimensional map.

Specifically, after the object information is acquired according to the map information, the first pose information in the object information is extracted, the first posture corresponding to the first pose information and the corresponding first position in a target scene are determined respectively, and then the object is placed in the first position with the first pose.

For example, for the object such as a single bed, the first pose information is extracted from the object information. It is determined that the first posture of the single bed is that the head of the bed faces east and the tail of the bed faces west, and the first position is by the window. Then, the three-dimensional object model corresponding to the single bed is placed in the position by the window in the target scene according to the pose that the head of the bed faces east and the tail of the bed faces west.

In addition, each object may also be placed in a specified position with a specified posture according to a user instruction. Specifically, the first pose information is acquired by analyzing the pose setting instruction, and then the three-dimensional object model is placed based on the first pose information in the instruction. This placement method is similar to the above, and will not be repeated here.

Also, when the three-dimensional object model is placed in the three-dimensional blank scene, the size of the three-dimensional object model may also be adjusted according to size information. The size information may be acquired from the object information or may also be acquired by analyzing a size setting instruction.

In an embodiment of the present application, the three-dimensional object model is placed based on the pose information of the object, so that the posture and position of the three-dimensional object model correspond to the actual object; and in the three-dimensional color map acquired in such a way, the object placement state in the target area can be more accurately identified.

In step 204, second pose information of the self-moving device is acquired.

In step 205, in the target scene, a second position and a second posture which correspond to the second pose information are determined, and the three-dimensional device model corresponding to the self-moving device is placed in the second position with the second posture.

In an embodiment of the present application, the three-dimensional device model corresponding to the self-moving device may also be placed in the target scene, so that the user can learn the current position of the self-moving device according to the three-dimensional color map.

Specifically, the second pose information of the self-moving device is acquired, and the three-dimensional device model is then placed according to the second pose information. This placement method is the same as that of the three-dimensional object model.

The second pose information may be acquired by using a sensor installed in the self-moving device.

In step 206, according to the category information, a target coloring scheme of the three-dimensional object model is determined, or a coloring instruction is analyzed to acquire the target coloring scheme, wherein the target coloring scheme includes a target color and/or a target texture.

In step 207, the three-dimensional object model is colored according to the target coloring scheme to acquire the three-dimensional color map.

In an embodiment of the present application, the three-dimensional object model is colored based on a certain rule, that is, the target coloring scheme, so as to acquire the color map.

Specifically, the target coloring scheme may be determined according to the category information in the object information. For example, all three-dimensional object models in the target scene that are categorized as the dining table are set to brown, or set to the texture of wood grains, or set to the brown wood texture.

The target coloring scheme corresponding to each category may be a preset default scheme or a scheme set by the user per se.

In addition, the target coloring scheme may also be determined according to the coloring instruction input by the user, and the coloring object corresponding to the coloring instruction may be an object or a type of objects, or some areas. For example, if the coloring instruction is analyzed to determine that the designated coloring object is a dining table Table_A and the target color is brown, the three-dimensional object model corresponding to the dining table Table_A is set to brown.

Also, the coloring instruction may also include automatic color change conditions, each of which corresponds to one target coloring scheme. If it is detected that the current condition reaches the automatic color change condition, the three-dimensional object model is recolored based on the target coloring scheme corresponding to the automatic color change condition, thereby achieving automatic color changing and matching. For example, each day, each week, each month, each quarter, each season, local festivals of the place where the self-moving device is located or the like may be taken as the automatic color change conditions. If the current time reaches the time corresponding to the automatic color change condition, the target coloring scheme corresponding to the automatic color change condition is executed.

For example, the automatic color change condition is seasonal change, wherein the target coloring scheme corresponding to summer is green and the target coloring scheme corresponding to autumn is yellow. When the season is changed, the object or area corresponding to the coloring instruction is changed into the color corresponding to the current season.

In addition, decals may be pasted in the three-dimensional color map in response to a decal instruction of the user. Decal pictures may be pictures pre-stored in the self-moving device or may also be pictures uploaded by the user per se. The decal instruction includes the decal picture and a decal position. Based on this instruction, the decal picture may be pasted in the decal position.

In step 208, in response to a pass prohibition instruction, a pass prohibition area or a virtual wall corresponding to the pass prohibition instruction is set in the three-dimensional color map; and/or, in response to a pass permission instruction, a pass permission area corresponding to the pass permission instruction is set in the three-dimensional color map.

In an embodiment of the present application, a pass permission area and a pass prohibition area may be set in the three-dimensional color map, wherein the pass permission area and the pass prohibition area may be set according to actual cleaning requirements of the user.

Specifically, the pass prohibition instruction may include the pass prohibition area, and the pass prohibition area corresponding to the pass prohibition instruction is identified in the three-dimensional color map with a special pattern or color to indicate that the self-moving device is prohibited from entering this area. The pass permission instruction may include the pass permission area. This setting method is the same as that of the pass prohibition area, and will not be repeated here. In addition, the pass prohibition instruction may also include the virtual wall, and the virtual wall is identified in the three-dimensional color map by a special graphic or symbol to indicate that the self-moving device is prohibited from crossing the virtual wall.

According to the embodiment of the present application, the pass prohibition area, the virtual wall and the pass permission area are set in the three-dimensional color map, so that the user can intuitively learn areas through which the cleaning robot can pass and cannot pass, that is, areas that can be cleaned or cannot be cleaned by the cleaning robot.

In step 209, a motion trajectory of the self-moving device or the photographing apparatus installed on the self-moving device is acquired, and a pose and an internal parameter of the photographing apparatus in each position on the motion trajectory are determined according to the motion trajectory.

In step 210, according to the pose and the internal parameter of each position respectively, the three-dimensional color map is processed to acquire a two-dimensional picture corresponding to the position.

In the embodiment of the present application, according to the pose and the internal parameter of the photographing apparatus, the three-dimensional color picture is processed to acquire the two-dimensional picture of the photographing apparatus in each position on the motion trajectory. Specifically, the pose and the internal parameter of the photographing apparatus in each position may be determined according to the motion trajectory of the photographing apparatus or the self-moving device. After the pose and internal parameter of the photographing apparatus are acquired, the three-dimensional color map is rendered to acquire the two-dimensional picture.

When the three-dimensional map is displayed in two dimensions, the displayed section may be a preset section, for example, z=0.1 m, or a specific section set based on the user instruction. The rendering method may be a rasterization method, a ray tracing method, etc.

In addition, after the two-dimensional picture corresponding to each position on the motion trajectory is acquired respectively, the pictures may be played on a display device installed on the self-moving device in turn.

In addition, after acquiring the three-dimensional color map, the method also includes:
modifying, in response to the instruction, the three-dimensional color map and displaying the modified three-dimensional color map.

In this embodiment, after acquiring the three-dimensional color map, the user may modify the three-dimensional color map according to actual needs. The modification operation may include one or more of modifying the three-dimensional object model, modifying the three-dimensional blank scene, modifying the first and/or second pose information, and modifying the coloring scheme. For example, the three-dimensional object model corresponding to a sliding door is modified to the three-dimensional object model corresponding to a folding door, or the single bed in the east and west directions is modified to be in the north and south directions, or the brown wood texture of the three-dimensional object model of the dining table may also be modified to the white wood texture.

It should be understood that the sequence number of each step in the above embodiment does not mean the order of execution, and the order of execution of each process should be determined according to the function and internal logic thereof, and should not form any limitation on the implementation process of the embodiments of the present application.

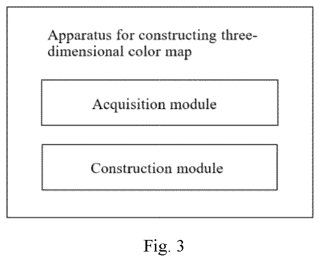

Also, as a specific implementation of the above method for constructing the three-dimensional color map, an embodiment of the present application provides an apparatus for constructing a three-dimensional color map. As shown in Fig. 3, the apparatus includes an acquisition module and a construction module.

The acquisition module is configured to acquire at least one three-dimensional object model and acquire a three-dimensional blank scene.

The construction module is configured to place the three-dimensional object model in the three-dimensional blank scene and color the three-dimensional object model to acquire the three-dimensional color map.

In one embodiment, the acquisition module is configured to:
acquire map information by photographing environmental information of a target area through a self-moving device, and recognize the map information to acquire object information;
acquire a three-dimensional preset model corresponding to the object information as the three-dimensional object model in a preset three-dimensional model library; and/or,
analyze, in response to a model input instruction, the model input instruction to acquire the three-dimensional object model.

In one embodiment, the acquisition module is configured to:
acquire the map information by photographing the environmental information of the target area through the self-self-moving device, and recognize the map information to acquire map boundary information;
determine a three-dimensional preset scene matched with the map boundary information as the three-dimensional blank scene in a plurality of three-dimensional preset scenes; or,
analyze, in response to a scene input instruction, the scene input instruction to acquire the three-dimensional blank scene.

In one embodiment, the object information includes category information and/or three-dimensional structural information. The acquisition module is configured to:
retrieve the three-dimensional preset model corresponding to the category information, and take the retrieved three-dimensional preset model as the three-dimensional object model; and/or,
respectively determine a similarity between the three-dimensional structural information and preset three-dimensional structural information of each of the three-dimensional preset models, and determine the three-dimensional preset model with the highest similarity as the three-dimensional object model.

In one embodiment, the construction module is configured to:
acquire first pose information in the object information, or analyze a pose setting instruction to acquire the first pose information; and
determine a first position and a first posture which correspond to the first pose information in the three-dimensional blank scene, and place the three-dimensional object model in the first position with the first posture.

In one embodiment, the construction module is configured to:
determine a target coloring scheme of the three-dimensional object model according to the category information, or analyze a coloring instruction to acquire the target coloring scheme, wherein the target coloring scheme includes a target color and/or a target texture; and
color the three-dimensional object model according to the target coloring scheme.

In one embodiment, the construction module is also configured to:
set, in response to a pass prohibition instruction, a pass prohibition area or a virtual wall corresponding to the pass prohibition instruction in the three-dimensional color map; and/or,
set, in response to a pass permission instruction, a pass permission area corresponding to the pass permission instruction in the three-dimensional color map.

In one embodiment, the construction module is also configured to:
acquire second pose information of the self-moving device; and
determine a second position and a second posture which correspond to the second pose information in the three-dimensional blank scene, and place a three-dimensional device model corresponding to the self-moving device in the second position with the second posture.

In one embodiment, the apparatus also includes a post-processing module, configured to:
acquire a motion trajectory of the self-moving device or a photographing apparatus installed on the self-moving device, and determine a pose and an internal parameter of the photographing apparatus in each position on the motion trajectory;
process the three-dimensional color map according to the pose and the internal parameter of each position respectively to acquire a two-dimensional picture corresponding to the position and display the two-dimensional picture; and/or,
modify the three-dimensional color map in response to a modification instruction, and display the modified three-dimensional color map.

It should be noted that other corresponding descriptions of each functional module involved in the apparatus for constructing the three-dimensional color map according to the embodiment of the present application may refer to the corresponding descriptions in the above method, and are not repeated here.

Based on the above method, accordingly, an embodiment of the present application also provides a storage medium, on which a computer program is stored. This program, when executed by a processor, implements the above method for constructing the three-dimensional color map.

Based on such an understanding, the technical solution of the present application may be embodied in the form of a software product, and the software product may be stored in a non-volatile storage medium (which may be a CD-ROM, a USB flash drive, a mobile hard disk, etc.) and includes several instructions to make an electronic device (which may be a personal computer, a server, or a network device, etc.) execute the method described in each implementation scene of the present application.

Based on the above method as shown in Figs. 1 to 2 and the virtual apparatus embodiment shown in Fig. 3, in order to achieve the above purposes, an embodiment of the present application also provides an electronic device. The electronic device may be specifically a personal computer, a server, a network device, etc., or may also be a self-moving device such as a cleaning robot. The electronic device includes a storage medium and a processor. The storage medium is configured to store a computer program. The processor is configured to execute the computer program to implement the above method for constructing the three-dimensional color map as shown in Figs. 1 to 3.

In one embodiment, the electronic device may also include a user interface, a network interface, a camera, a radio frequency (RF) circuit, a sensor, an audio circuit, a WI-FI module, and the like. The user interface may include a display screen and an input unit such as a keyboard. The optional user interface may also include a USB interface, a card reader interface, etc. The network interface may optionally include a standard wired interface, a wireless interface (such as a Bluetooth interface and a WI-FI interface), etc.

It can be understood by those skilled in the art that the structure of the electronic device according to the embodiment does not form a limitation on the electronic device, and may include more or less components, or combine some components, or have different component arrangements.

The storage medium may also include an operating system and a network communication module. The operating system is a program that manages and saves hardware and software resources of the electronic device, and supports the operation of information processing programs and other software and/or programs. The network communication module is configured to implement communication between respective controls inside the storage medium and with other hardware and software in the entity device.

Through the descriptions of the above implementations, it can be clearly understood by those skilled in the art that the present application may be implemented by means of software plus a necessary general hardware platform, or by hardware.

It can be understood by those skilled in the art that the accompanying drawings are merely schematic diagrams of one preferred implementation scenario, and the units or processes in the accompanying drawings are unnecessarily essential for implementing the present application. It can be understood by those skilled in the art that the units in the apparatus in the implementation scenario may be distributed in the apparatus of the implementation scenario according to the descriptions of the implementation scenario, and may also be located in one or more apparatuses different from this implementation scenario with corresponding changes. The units in the above implementation scenario may be merged into one unit or also split into a plurality of sub-units.

The above serial numbers of the present application are only for descriptions, and do not represent the advantages and disadvantages of the implementation scenario. The foregoing disclosed is merely several specific implementation scenarios of the present application, but the present application is not limited thereto. Any changes conceivable by those skilled in the art should fall within the protection scope of the present application.

## Claims

1. A method for constructing a three-dimensional color map, comprising:
acquiring at least one three-dimensional object model and acquiring a three-dimensional blank scene; and
placing the three-dimensional object model in the three-dimensional blank scene, and coloring the three-dimensional object model to acquire the three-dimensional color map.

2. The method according to claim 1, wherein the acquiring the at least one three-dimensional object model, comprises:
acquiring map information by photographing environmental information of a target area through a self-moving device,
recognizing the map information to acquire object information; and
acquiring a three-dimensional preset model corresponding to the object information in a preset three-dimensional model library as the three-dimensional object model;
and/or
analyzing, in response to a model input instruction, the model input instruction to acquire the three-dimensional object model.

3. The method according to claim 2, wherein the acquiring the three-dimensional blank scene, comprises:
acquiring the map information by photographing the environmental information of the target area through the self-moving device, and recognizing the map information to acquire map boundary information;
determining a three-dimensional preset scene matched with the map boundary information in a plurality of three-dimensional preset scenes as the three-dimensional blank scene; or
analyzing, in response to a scene input instruction, the scene input instruction to acquire the three-dimensional blank scene.

4. The method according to claim 2, wherein the object information comprises category information and/or three-dimensional structural information; and the acquiring the three-dimensional preset model corresponding to the object information as the three-dimensional object model, comprises:
retrieving the three-dimensional preset model corresponding to the category information, and taking the three-dimensional preset model retrieved as the three-dimensional object model; and/or
determining a similarity between the three-dimensional structural information and preset three-dimensional structural information of each three-dimensional preset model respectively, and determining the three-dimensional preset model with the highest similarity as the three-dimensional object model.

5. The method according to claim 2, wherein the placing the three-dimensional object model in the three-dimensional blank scene, comprises:
acquiring first pose information in the object information, or acquiring the first pose information by analyzing a pose setting instruction; and
determining a first position and a first posture which correspond to the first pose information in the three-dimensional blank scene, and placing the three-dimensional object model in the first position, the three-dimensional object model being in the first posture.

6. The method according to claim 4, wherein the coloring the three-dimensional object model, comprises:
determining a target coloring scheme of the three-dimensional object model according to the category information, or determining the target coloring scheme by analyzing a coloring instruction, wherein the target coloring scheme comprises a target color and/or a target texture; and
coloring the three-dimensional object model according to the target coloring scheme.

7. The method according to claim 1, wherein after acquiring the three-dimensional color map, the method also comprises:
setting, in response to a pass prohibition instruction, a pass prohibition area or a virtual wall corresponding to the pass prohibition instruction in the three-dimensional color map; and/or
setting, in response to a pass permission instruction, a pass permission area corresponding to the pass permission instruction in the three-dimensional color map.

8. The method according to claim 2, wherein after placing the three-dimensional object model in the three-dimensional blank scene, the method also comprises:
acquiring second pose information of the self-moving device; and
determining a second position and a second posture which correspond to the second pose information in the three-dimensional blank scene, and placing a three-dimensional device model corresponding to the self-moving device in the second position, the three-dimensional device model being in the second posture.

9. The method according to claim 8, wherein after acquiring the three-dimensional color map, the method also comprises:
acquiring a motion trajectory of the self-moving device or a motion trajectory of a photographing apparatus installed on the self-moving device, and determining a pose and an internal parameter of the photographing apparatus in each position on the motion trajectory;
processing the three-dimensional color map according to the pose and the internal parameter of each position respectively to acquire a two-dimensional picture corresponding to the position; and/or
modifying the three-dimensional color map in response to a modification instruction, and displaying the three-dimensional color map modified.

10. An apparatus for constructing a three-dimensional color map, comprising:
an acquisition module, configured to acquire at least one three-dimensional object model and acquire a three-dimensional blank scene; and
a construction module, configured to place the three-dimensional object model in the three-dimensional blank scene and color the three-dimensional object model to acquire the three-dimensional color map.

11. A storage medium, configured to store programs or instructions thereon, wherein when the programs or instructions is executed by a processor, the method according to any one of claims 1 to 9 is implemented.

12. An electronic device, comprising a memory and a processor, wherein the memory is configured to store a computer program, and the processor is configured to implement the method according to any one of claims 1 to 9 when executing the computer program.
